# EUROPÄISCHE PATENTSCHRIFT

(11) **EP 1 306 276 B1**
(45) Veröffentlichungstag und Bekanntmachung des Hinweises auf die Patenterteilung: **16.11.2005**
(21) Anmeldenummer: 02021516.6
(22) Anmeldetag: 26.09.2002
(51) Int. Cl.: B60S 1/08, B60H 1/00

(54) **Sensoreinheit zur Detektion einer Benetzung einer Scheibe**
Sensor unit for detecting moisture on a glass pane
Unité de détection pour détecter la présence d'humidité sur une vitre

(30) Priorität: 26.10.2001 DE 10152998
(43) Veröffentlichungstag der Anmeldung: 02.05.2003
(73) Patentinhaber: Preh GmbH, 97616 Bad Neustadt a.d. Saale (DE)
(72) Erfinder: Schmitt, Hans-Michael, Dr., 97702 Münnerstadt (DE); Bach, Jürgen, 97616 Salz (DE); Polzer, Thomas, Dr., 97616 Bad Neustadt (DE); Hartmann, Rudolf, 97616 Salz (DE)
(74) Vertreter: Dietrich, Barbara

(56) Entgegenhaltungen:
- EP-A- 0 710 593
- EP-A- 0 753 438
- DE-A- 3 721 659
- DE-A- 3 842 180
- DE-A- 19 602 354
- DE-A- 19 723 858
- DE-U- 9 403 135
- US-A- 6 084 519
- PATENT ABSTRACTS OF JAPAN vol. 1998, no. 02, 30. Januar 1998 (1998-01-30) -& JP 09 257952 A (YAZAKI CORP), 3. Oktober 1997 (1997-10-03)

## Beschreibung

Die Erfindung betrifft eine Sensoreinheit zur Detektion einer Benetzung einer Scheibe, insbesondere einer Kraftfahrzeugwindschutzscheibe.

Bekannt sind Beschlagsensoren zur Erfassung einer inneren sowie Regensensoren zur Erfassung einer äußeren Benetzung der Scheibenoberfläche. Dabei werden Signale des Beschlagsensors für die Ansteuerung einer Klima- , Heizungs- und/oder Lüftungsanlage verwendet. Die Signale des Regensensors werden hingegen zur Steuerung einer Scheibenwisch-. oder Waschanlage für Kraftfahrzeuge herangezogen. Derartige Sensoren arbeiten dabei u.a. nach dem optoelektronischen, dem resistiven oder dem kapazitiven Prinzip. Regensensoren sind außen auf der Kraftfahrzeugscheibe aufgebracht, Beschlagsensoren auf der Innenseite. Beide arbeiten unabhängig voneinander.

Eine nach dem optoelektronischen Prinzip arbeitende Sensoreinrichtung zur Erfassung der äußeren Benetzung ist in der DE 198 15 748 C2 offenbart.

In der DE 43 34 381 A1 wird eine Einrichtung für die automatische Steuerung eines Scheibenwischermotors dargestellt, die einen Feuchtesensor sowie eine Auswerteeinrichtung beinhaltet. In der Vorrichtung zum Betreiben eines Scheibenwischermotors aus der DE 197 13 835 A1 wird ebenfalls ein Regensensor verwendet.

Ein Verfahren zur Anpassung der Ansprechempfindlichkeit eines Niederschlagssensorsystems an Umgebungsverhältnisse sowie ein Sensorsystem mit einem Niederschlagssensor offenbart die DE 41 34 432 A1.

Die DE 6 9115647 T2 offenbart eine Vorrichtung zur Heizung und Belüftung des Fahrgastraumes eines Kraftfahrzeugs, bei der ein Beschlagfühler, der an der Innenseite einer Fahrzeugscheibe angebracht ist, mit einem elektronischen Modul zur Steuerung von Schließklappen verbunden ist.

Aus der DE 44 27 627 C2 ist ein Verfahren zur Herstellung eines nach dem resistiven Meßprinzip arbeitenden Regensensors bekannt, der mindestens zwei elektrisch leitende, zueinander benachbarte Sensorelemente aufweist, welche im Zusammenwirken mit das Sensorfeld benetzenden elektrisch leitfähigen Substanzen, vorzugsweise Wasser, einen seine Impedanz ändernden Widerstand bilden. Der Sensor besteht im wesentlichen aus zwei fächerartig ineinandergreifenden Flächen, die auf einer Glasplatte aufgebracht sind und das Widerstandselement bilden.

Ein weiterer Feuchtesensor für Windschutzscheiben ist in der DE 40 41 160 C2 beschrieben. Dieser ist auf der Außenscheibe der Windschutzscheibe aufgebracht und besteht aus zwei elektrisch leitenden Teilen, die einen Abstand voneinander aufweisen und voneinander durch einen Spalt vorbestimmter Breite voneinander elektrisch isoliert sind. Der Spalt ist vorzugsweise nicht Größer als die Breite eines Regentropfens oder Nebeltropfens.

Die DE 44 24 985 A1 offenbart einen Regensensor, der auf der Fahrzeugscheibe im Bereich eines Scheibenwischers angeordnete Widerstandsstrukturen aufweist, die in Abhängigkeit der Regentropfen ihren Widerstand linear verändern.

In der WO 94/08247 wird der Aufbau als auch die Funktionsweise eines kapazitiven Feuchtesensors offenbart.

Aus dem DE-A-3 842 180 ist ein Feuchtigkeitssensor bekannt, der mittels der Messung einer Kapazität zwischen den auf einem Träger aufgebrachten Elektroden eine Benetzung der Innenseite einer Scheibe erfasst.

Das Prinzip des kapazitiv arbeitenden Feuchtesensors wird auch in der EP 0 753 438 A1 beschrieben. Aus dem Dokument EP-A-0 710 593 ist eine Sensorvorrichtung bekannt, die zur Erfassung der Beuetzung der Aussenseite einer Scheibe dient, bei der die Elektroden auf der Innenseite der Scheibe angeordnet sind.

Die Aufgabe der Erfindung besteht nun darin, eine Sensoreinheit aufzuzeigen, mit der gleichzeitig eine äußere, z.B. Regen, als auch eine innere Benetzung erkannt wird und die zudem kostengünstig ist.

Gelöst wird die Aufgabe durch die Merkmale des Patentanspruchs 1.

Der Erfindung liegt die Idee zugrunde, die Sensoreinheit mit wenigstens zwei nach einen direkten kapazitiven Prinzip arbeitende Sensoren auszustatten, die beide an einem gemeinsamen Träger an die Innenseite einer Scheibe aufgebracht werden. Die beide Sensoren sind mit einer gemeinsamen umschaltbaren Auswerteeinheit elektrisch gekoppelt, so daß durch wechselseitiges Auswerten der beiden Sensoren sowohl beginnender Beschlag bzw. beginnende Benetzung an der Innenseite einer Fahrzeugscheibe als auch beginnende Benetzung der Außenseite der Scheibe, z.B. durch Regen, erkannt wird, wobei beide Sensoren in einem zudem kleinbauend ausgeführten Sensormodul integriert sind. Die jeweils nicht gewünschte Detektion hat keinen Einfluß auf die Auswertung der gewünschten Detektion. Zusätzlich können auch Maßnahmen vorgesehen werden, beispielsweise eine kapazitive Abschirmung, wodurch der unerwünschte Einfluß gleichfalls verhindert wird.

Die die Sensoreinheit bildenden oder im Modul integrierten Sensoren können aber auch mit getrennten Auswerteeinheiten betrieben werden.

Der Beschlagsensor weist eine auf Feuchtigkeit ansprechende Polymergoldfolie auf, kann alternativ aber auch eine Interdigitalstruktur mit einer Deckglasschicht besitzen.

Der Regensensor wird durch eine kapazitive Elektrodenstruktur in nicht differentieller Anordnung der Sensorflächen gebildet.

In einer Weitergestaltung der Erfindung wird durch weitere Integration beider Sensoren zusammen mit der gemeinsamen, umschaltbaren Auswerteeinheit ein kompakt aufgebautes Sensormodul angeboten. In dieses Modul können weitere Sensoren, wie Fahrlichtsensor, Sonnensensor etc. problemlos integriert werden.

Anhand eines Ausführungsbeispieles mit Zeichnung soll die Erfindung näher erläutert werden.

Es zeigt
- Fig. 1: eine Scheibe eines Kraftfahrzeuges mit aufgebrachter Sensoreinheit,
- Fig. 2: ein Blockbilddarstellung der Sensoreinheit aus Fig. 1,
- Fig. 3: einen allgemeinen Aufbau eines Sensormoduls,
- Fig. 4: der innere Aufbau des Sensormoduls.

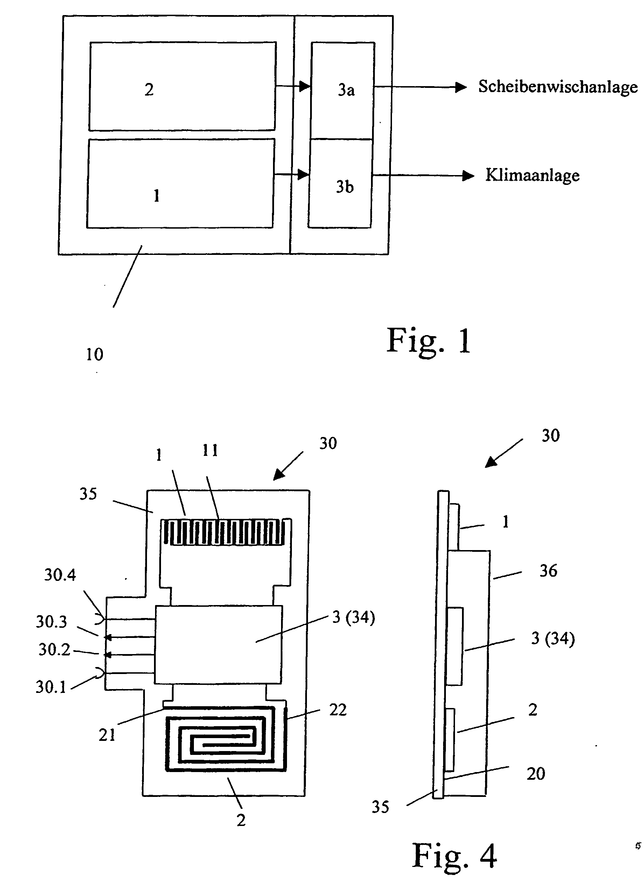

In Fig. 1 ist eine allgemeine Sensoreinheit 10 aufgezeigt, die zwei getrennte Sensoren, einen Beschlagsensor 1 sowie einen Regensensor 2, umfaßt. Beide Sensoren 1, 2 sind mit jeweils einer Auswerteeinheit 3a bzw. 3b elektrisch verbunden. Es kann aber auch eine gemeinsame umschaltbare Auswerteelektronik 3 vorgesehen sein. Die jeweiligen Versorgungs- bzw. Signalleitungen sind vorzugsweise in einer Struktur integriert.
Der Beschlagsensor 1 arbeitet auf kapazitiver Basis, wobei die Kapazität des Kondensators durch Feuchteaufnahme einer Polymerstruktur (nicht näher dargestellt) des Beschlagsensors 1 verändert wird.
Die Sensorfläche des Regensensors 2 besteht aus zwei voneinander elektrisch getrennten leitfähigen Bahnen 21, 22 (siehe Fig.4). Die Kapazität des Regensensors 2 wird durch die Beeinflussung der Streufelder dieser beiden als Kondensatorelektroden arbeitenden Leiterbahnen 21, 22 z.B. durch Regen verändert.
Durch Umschaltung des Einganges der Auswerteeinheit 3 bzw. durch die einzelnen Auswerteeinheiten 3a und 3b wird das jeweilige Signal eines der beiden Sensoren 1, 2 zur Auswertung gebracht, welches laut Programmierung ausgewertet werden soll. Da beide Sensoren 1, 2 nach dem selben Meßprinzip arbeiten, erfolgt auch die Auswertung als solches gleich.
Das Umschalten zwischen den beiden Sensoren 1, 2 ist zeitunkritisch, da die Reaktion auf die Sensorsignale verglichen mit der Umschalt- und Auswertezeit lang sein können.

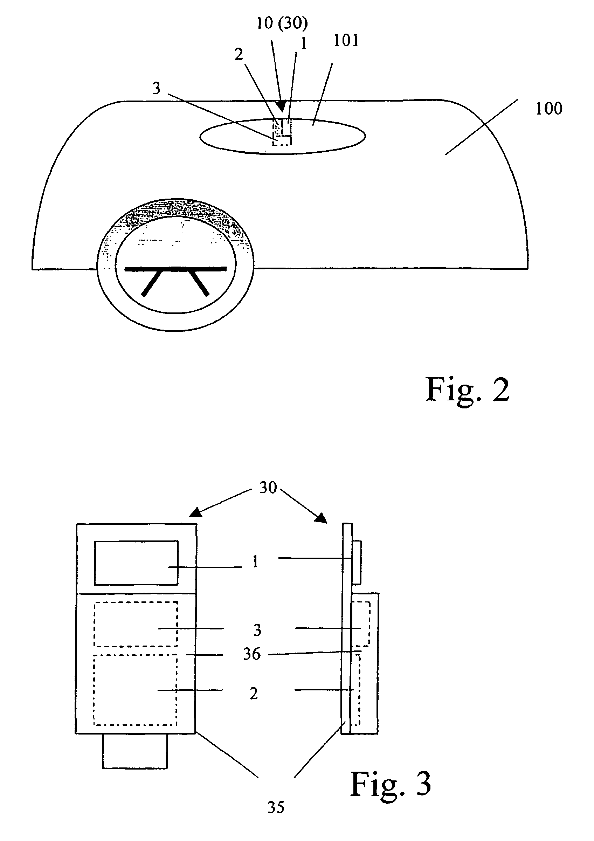

Der Regensensor 2 als auch der Beschlagsensor 1 sind von innen auf einer in Fig. 2 dargestellten Fahrzeugscheibe 100, vorzugsweise im Bereich eines Spiegelfußes 101 aufgebracht.

In Fig. 3 ist als vorteilhafte Weitergestaltung ein Sensormodul 30 dargestellt, das sowohl einen Beschlagsensor 31 als auch einen Regensensor 32 umfaßt, deren Signale über eine gemeinsame umschaltbare Auswerteeinheit 33 zur Auswertung gebracht werden, wobei in der bevorzugten Variante die gesamte Auswerteeinheit 33 Bestandteil des Sensormoduls 30 ist. Der Beschlagsensor 31 mißt den inneren Beschlag, der Regensensor 32 die äußere Feuchtigkeit.
Das Sensormodul 30 besteht aus einem gemeinsamen Trägerteil 35, auf dem der Beschlagsensor 31 und der Regensensor 32 in Kombination gemeinsam aufgebracht sind. Das Trägerteil 35 ist so konstruiert, daß es die Funktion des Regensensors 32 hinter einer Fahrzeugscheibe nicht beeinflußt. Der Aufbau der beider Sensoren 31, 32 ist z.B. wie in Fig. 1 beschrieben. Zumindest auf der Sensorfläche 20 des Regensensors 32 ist eine Abschirmung 36 aufgebracht, die einen Einfluß der im Fahrgastraum auftretenden Feuchtigkeit auf den Regensensor 32 verhindert. Vorteilhaft ist es, die Abschirmung 36 auch über die Auswerteeinheit 33 zu bringen.

Ein innerer Aufbau der Sensoren 31 und 32 ist in Fig. 4 dargestellt, wobei der Beschlagsensor 10 eine Interdigitalstruktur 10 aufweist. Hierbei befindet sich zumindest ein Teil 34 der Auswerteeinheit 33, beispielsweise eine Umschaltelektronik der Auswerteeinheit 33 mit auf dem Trägerteil 35, wobei auch hier die gesamte Auswerteeinheit 33 auf dem Trägerteil 35 integriert sein kann (Fig.3) . Über elektrische Anschlüsse 30.1 bis 30.4 ist das Sensormodul 30 mit weiteren elektrischen Komponenten verschaltbar.

## Patentansprüche

1. Sensoreinheit zur Detektion einer Benetzung auf einer Innenseite und auf einer Außenseite einer Scheibe (100), aufweisend zumindest einen nach einem direkten kapazitiven Prinzip arbeitenden Sensor (1, 31) zur Ermittlung eines Beschlages auf der Innenseite der Scheibe sowie einen nach einem direkten, kapazitiven Prinzip arbeitenden Sensor (2, 32) zur Ermittlung eines Beschlages auf der Außenseite der Scheibe (100), wobei die Sensoren (1, 2, 31, 32) auf einem gemeinsamen Träger (35) aufgebracht und in einem Sensormodul (30) integriert sind, wobei das Sensormodul (30) auf der Innenseite der Scheibe (100) angebracht ist, und die Sensoren (1, 2, 31, 32) mit einer Auswerteeinheit (3, 33) elektrisch verbunden sind und die Auswerteeinheit (3, 33) zumindest in Teilen (3a, 3b, 34) in das Sensormodul (30) eingebunden ist.

2. Sensoreinheit nach Anspruch 1, **dadurch gekennzeichnet, dass** die Auswerteeinheit (3) oder Teile (3a, 3b, 34) davon auf dem Träger (35) des Sensormoduls (30) angebracht sind.

3. Sensoreinheit nach Anspruch 1 oder 2, **dadurch gekennzeichnet, dass** die Auswerteeinheit (3) umschaltbar ist, wobei stets das Sensorsignal auf die Auswerteeinheit (3) geschaltet wird, welches auszuwerten ist.

4. Sensoreinheit nach Anspruch 3, **dadurch gekennzeichnet, dass** der Beschlagsensor (1, 31) eine Polymergoldfolie ausweist.

5. Sensoreinheit nach Anspruch 3, **dadurch gekennzeichnet, dass** der Beschlagsensor (1, 31) eine Interdigitalstruktur (10) ausweist.

6. Sensoreinheit nach Anspruch 3, **dadurch gekennzeichnet, dass** der Beschlagsensor (2, 32) für die Außenseite der Scheibe (100) eine kapazitive Elektrodenstruktur (21, 22) in nicht differentieller Anordnung der Sensorflächen ausweist.

7. Sensoreinheit nach einem oder mehreren der vorstehenden Ansprüche, **dadurch gekennzeichnet, dass** zumindest über der Sensorfläche (20) des Beschlagsensors (2, 32) für die Außenseite der Scheibe (100) eine Abschirmung (36) aufgebracht ist.

8. Sensoreinheit nach einem oder mehreren der vorstehenden Ansprüche, **dadurch gekennzeichnet, dass** im Sensormodul (30) mindestens ein weiterer Sensor wie Fahrlichtsensor, Sonnensensor etc. integriert ist.

## Claims

1. Sensor unit for detecting wetting of the inside and of the outside of a pane (100), comprising at least one sensor (1, 31) which operates on the basis of a direct capacitive principle and is intended for determining mist on the inside of the pane, and a sensor (2, 32) which operates on the basis of a direct, capacitive principle and is intended for determining mist on the outside of the pane (100), the sensors (1, 2, 31, 32) being mounted on a common support (35) and integrated in a sensor module (30), the sensor module (30) being fitted on the inside of the pane (100), and the sensors (1, 2, 31, 32) being electrically connected to an evaluation unit (3, 33), and the evaluation unit (3, 33) being incorporated into the sensor module (30), at least in parts (3a 3b, 34).

2. Sensor unit according to Claim 1, **characterized in that** the evaluation unit (3) or parts (3a, 3b, 34) thereof are fitted on the support (35) of the sensor module (30).

3. Sensor unit according to Claim 1 or 2, **characterized in that** the evaluation unit (3) can be switched over, the sensor signal which is to be evaluated always being switched to the evaluation unit (3).

4. Sensor unit according to Claim 3, **characterized in that** the mist sensor (1, 31) has a polymer gold foil.

5. Sensor unit according to Claim 3, **characterized in that** the mist sensor (1, 31) has an interdigital structure (10).

6. Sensor unit according to Claim 3, **characterized in that** the mist sensor (2, 32) for the outside of the pane (100) has a capacitive electrode structure (21, 22) in a non-differential arrangement of the sensor surfaces.

7. Sensor unit according to one or more of the preceding claims, **characterized in that** a screen (36) is mounted at least over the sensor surface (20) of the mist sensor (2, 32) for the outside of the pane (100).

8. Sensor unit according to one of more of the preceding claims, **characterized in that** at least one further sensor such as a driving light sensor, sun sensor etc. is integrated in the sensor module (30).

## Revendications

1. Unité capteur pour détecter la présence d'humidité sur une face interne et sur une face externe d'une vitre (100), comprenant au moins un capteur (1, 31) fonctionnant selon un principe capacitif direct pour rechercher de la buée sur la face interne de la vitre ainsi qu'un capteur (2, 32) fonctionnant selon un principe capacitif direct pour rechercher de la buée sur la face externe de la vitre (100), les capteurs (1, 2, 31, 32) étant montés sur un support (35) commun et intégrés dans un module capteur (30), le module capteur (30) étant appliqué sur la face interne de la vitre (100) et les capteurs (1, 2, 31, 32) étant reliés électriquement à une unité de traitement (3, 33) et l'unité de traitement (3, 33) étant insérée en partie (3a, 3b, 34) au moins dans le module capteur (30).

2. Unité capteur selon la revendication 1, **caractérisée en ce que** l'unité de traitement (3) ou certaines de ses parties (3a, 3b, 34) sont appliquées sur le support (35) du module capteur (30).

3. Unité capteur selon la revendication 1 ou 2, **caractérisée en ce que** l'unité de traitement (3) peut être commutée, le signal du capteur à traiter étant constamment branché sur l'unité de traitement (3).

4. Unité capteur selon la revendication 3, **caractérisée en ce que** le capteur de buée (1, 31) comporte une feuille d'or polymère.

5. Unité capteur selon la revendication 3, **caractérisée en ce que** le capteur de buée (1, 31) comporte une structure interdigitale (10).

6. Unité capteur selon la revendication 3, **caractérisée en ce que** le capteur de buée (2, 32) pour la face externe de la vitre (100) comporte une structure d'électrodes capacitive (21, 22) dans une disposition non différentielle des surfaces du capteur.

7. Unité capteur selon une ou plusieurs des revendications précédentes, **caractérisée en ce qu'**un blindage (36) est monté au moins sur la surface de capteur (20) du capteur de buée (2, 32) pour la face externe de la vitre (100).

8. Unité capteur selon une ou plusieurs des revendications précédentes, **caractérisée en ce qu'**au moins un autre capteur comme un capteur d'éclairage, un capteur solaire etc... est intégré dans le module capteur (30).
